# FASCICULE DE BREVET EUROPEEN

(11) **EP 2 508 419 B1**
(45) Date de publication et mention de la délivrance du brevet: **03.06.2015**
(21) Numéro de dépôt: 12163174.1
(22) Date de dépôt: 04.04.2012
(51) Int. Cl.: B64C 1/06

(54) **Procédé de ralentissement de propagation de fissures dans une structure sécurisée et cadre fort sécurisé, en particulier de fuselage**
Verfahren zur Verlangsamung der Rissausbreitung in einer gesicherten Struktur, und gesicherter Hauptspant, insbesondere im Rumpf
Method of slowing the propagation of cracks in a fail safe structure and fail safe frame, especially for fuselage

(30) Priorité: 05.04.2011 FR 1152922
(43) Date de publication de la demande: 10.10.2012
(73) Titulaire: Airbus Opérations SAS, 31060 Toulouse (FR)
(72) Inventeur: Guillemaut, Julien, 28906 Getafe-Madrid (ES)
(74) Mandataire: Hauer, Bernard

(56) Documents cités:
- GB-A- 125 748
- GB-A- 1 497 155
- US-A- 5 098 011
- US-A1- 2005 247 818
- US-A1- 2007 277 470
- VOGELESANG L B ET AL: "ARALL: A materials challenge for the next generation of aircraft", MATERIALS AND DESIGN, LONDON, GB, vol. 7, no. 6, 1 novembre 1986 (1986-11-01), pages 287-300, XP024153163, ISSN: 0261-3069, DOI: 10.1016/0261-3069(86)90098-1 [extrait le 1986-11-01]

## Description

### DOMAINE TECHNIQUE

L'invention concerne un procédé de ralentissement de propagation de fissures dans une structure sécurisée, c'est-à-dire une structure à chemin de propagation multiple des efforts de reprise des charges. L'invention se rapporte également à un cadre fort d'un fuselage d'aéronef apte à mettre en oeuvre ce procédé.

De manière générale, une structure est dite sécurisée ou plus précisément « fail-safe » (à renfort sécurisé en terminologie anglaise), lorsqu'il existe plusieurs chemins possibles pour reprendre les charges. En particulier, une structure sécurisée peut se composer de deux pièces métalliques longitudinales assemblées entre elles pour servir de cadre de renfort dit « cadre fort » d'un fuselage d'aéronef. Du fait des niveaux importants des efforts appliqués, et des difficultés liées à la fabrication, ces cadres sont généralement métalliques.

La certification d'un tel cadre fort impose, pour l'ensemble de ses deux pièces, une tenue mécanique à 150% des efforts maximums possibles rencontrés dans la vie de l'aéronef (charges dites « extrêmes »). Lorsqu'une des deux pièces est supposée cassée, la tenue mécanique à 100% des efforts maximums appliqués dans la vie de l'aéronef (charges dites « limites ») doit être démontrée.

Les cadres forts de fuselage étant en métal, le principal critère dimensionnant de ces cadres est généralement la tolérance aux dommages. En effet, la certification demande que la plus grande des fissures, qui n'a pas été détectée lors d'une première inspection, ne puisse pas se propager jusqu'à la taille critique - définie comme apte à ruiner totalement la structure - pendant l'intervalle de temps qui sépare la première inspection de l'inspection suivante.

Afin de mesurer la tolérance aux dommages d'un cadre fort de fuselage, il est convenu de suivre un modèle de propagation de fissures permettant d'évaluer la taille de la ou des fissures en fonction du nombre de vols réalisés. Les conditions initiales généralement considérées pour une structure de type cadre fail-safe consiste généralement à considérer des fissures de tailles différentes sur chacune des pièces du cadre fail-safe. Les fissures sont formées sur les deux pièces assemblées du cadre puis se propagent à des vitesses proportionnelles à la taille initiale des fissures. Lorsqu'une fissure a atteint la taille critique de rupture, la pièce correspondante est cassée et l'autre pièce se trouve surchargée à cause de la redistribution des efforts du cadre rompu dans l'autre cadre, ainsi que dans la peau du fuselage. Un ordre de grandeur de la surcharge subie par le cadre restant est d'environ 80%. On parle alors de redistribution globale des efforts. La propagation de fissure dans le cadre non-rompue est alors très rapide. L'intervalle entre deux inspections doit alors être déterminé par le critère de dimensionnement des pièces.

### ÉTAT DE LA TECHNIQUE

De manière générale, des moyens sont donc recherchés pour améliorer la tenue en tolérance des structures métalliques de type sécurisé au regard des dommages, c'est-à-dire de la propagation des fissures.

II est par ailleurs connu du document de brevet US 2010/0316857 un matériau composite multicouche intégrant une couche métallique de renfort. Un tel matériau est destiné à servir dans des zones d'introduction de force, par exemple de vis ou de rivet, ou des zones de connexion. II est donc limité aux fissures qui prennent naissance dans ces zones particulières, pour lesquelles des protections sont en général prévues.

Par ailleurs, il est connu :
- du document de brevet GB 1 497 155, une structure renforcée, comprenant une bande sinusoïdale en matériau composite disposée dans un tube métallique formé à la base d'un cadre métallique ;
- du document de brevet US 2005/247818, une structure renforcée, comprenant des pièces métalliques longitudinales de renfort ;
- du document de brevet US 2007/277470, des éléments de rigidification et des éléments additionnels de renfort, qui sont collés entre eux ou formés d'une seule pièce ; et
- du document de brevet US 5 098 011, un procédé de fabrication de pièces métalliques de structure formées de plusieurs éléments.

Afin de limiter la propagation des fissures, les solutions classiques consistent à augmenter les dimensions et/ou à multiplier le nombre de poutres de liaison. Ces solutions sont onéreuses et augmentent la masse du cadre.

### EXPOSÉ DE L'INVENTION

L'invention vise à améliorer la tenue en tolérance aux dommages consécutifs à la propagation de fissures dans des structures sécurisés de type fail-safe, induisant soit un gain en masse soit une augmentation de durée entre deux inspections de la structure à masse équivalente.

Pour ce faire, l'invention propose de former une structure hybride composite dans la structure sécurisée.

Plus précisément, la présente invention a pour objet un procédé d'anti-propagation de fissures dans une structure sécurisée comportant au moins deux pièces métalliques en forme de « U », les bases desdites pièces métalliques étant assemblées dos à dos et les côtés desdites pièces métalliques étant alignés en formant un talon. Dans ce procédé, au moins un élément de structure en matériau composite est lié par des fixations au talon formé par les pièces métalliques couplées entre elles pour former un cadre fort dans une configuration réparatrice de coupure de redistribution globale des efforts mécaniques dans les autres pièces de la structure, de sorte que les efforts portés par la pièce fissurée sont transmis uniquement dans cette pièce au droit de la fissure. La redistribution des efforts est dite locale.

Selon un mode de mise en oeuvre particulier, l'élément de structure s'étend sur toute la longueur des pièces métalliques.

L'invention porte également sur un cadre fort sécurisé équipé d'un élément de structure en matériau composite conformément au procédé ci-dessus. Ce cadre possède des pièces longitudinales de structure profilée et assemblées dos à dos par des fixations, de sorte que des premiers côtés se trouvent alignés longitudinalement, collés sur la peau de fuselage, et les autres côtés alignés longitudinalement à distance des premiers côtés. Des fixations couplent l'élément de structure composite à la face externe des côtés des pièces métalliques alignés longitudinalement à distance des premiers côtés.

Selon des modes de réalisation préférés :
- les pièces métalliques sont au nombre de deux ;
- le matériau des pièces métalliques est à base d'un alliage d'aluminium ou de titane ;
- l'élément de structure en matériau composite forme une éclisse longitudinale qui recouvre toute l'étendue des faces externes des côtés des pièces métalliques alignés longitudinalement à distance des premiers côtés ;
- l'élément de structure en matériau composite est lié aux faces externes par un moyen de solidarisation choisi entre un collage par une résine époxy, par une couche polymérisée par rayonnement et/ou par dégagement thermique.

### PRÉSENTATION DES FIGURES

D'autres aspects et avantages de la présente invention apparaîtront à la lecture de la description détaillée qui suit, en référence aux figures annexées qui représentent, respectivement :
- les figures 1 et 2, des vues partielles de face intérieur et arrière d'un fuselage d'aéronef sur lequel est monté longitudinalement un cadre fort ;
- la figure 3, une vue en coupe schématisée d'un exemple de cadre fort de fuselage selon l'invention, et
- la figure 4, des schémas 4a à 4e en coupe un cadre fort selon l'invention dans lequel des fissures provoquées se propagent dans le temps.

### DESCRIPTION DÉTAILLÉE

Dans tout le texte, les qualificatifs « interne » et dérivés ou « externe » et dérivés se rapportent, respectivement, à des éléments plus proches ou plus éloignés de la peau de fuselage et, respectivement, à des éléments tournés vers ou dans une direction opposée à cette peau de fuselage. Par ailleurs, les mêmes signes de référence désignent des éléments identiques dans les figures annexées.

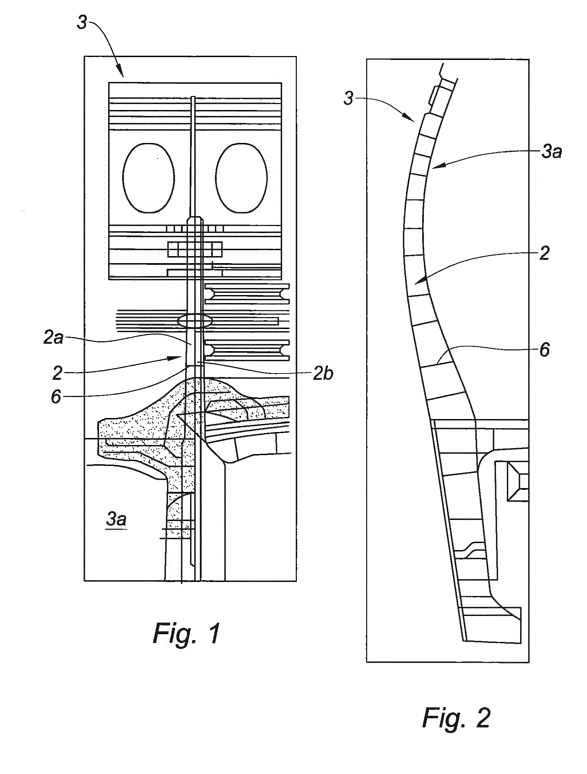

En référence aux vues frontale et arrière des figures 1 et 2, un cadre sécurisé 2 comporte deux pièces métalliques 2a et 2b en forme de longerons (profil en C par exemple) sensiblement identiques fixés sur une peau de fuselage 3. Les longerons peuvent être collés ou co-collés, c'est-à-dire recuits avec le fuselage, et fixés par rivetage, soudage ou équivalent sur la face interne 3a de la peau 3. Les longerons sont maintenus ensemble par des fixations réparties sur toute leur longueur. Des voiles 6 sont également répartis sur toute leur longueur afin d'assurer la stabilité mécanique. L'ensemble de ces deux pièces métalliques 2a et 2b ainsi assemblées forme un cadre sécurisé 2 de type fail safe.

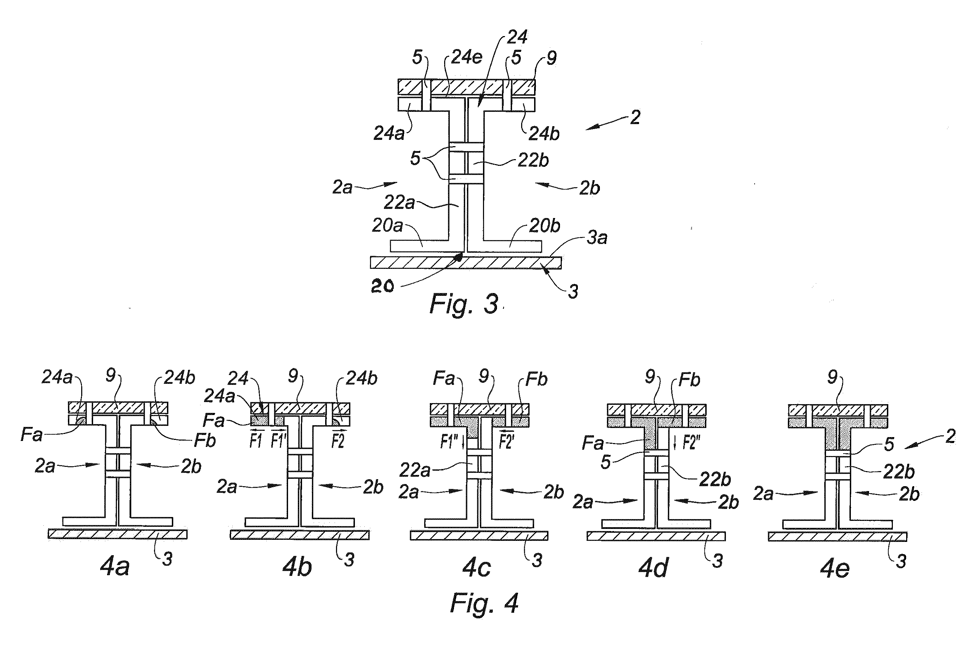

De manière plus détaillée, en référence à la coupe de la figure 3, chaque longeron 2a et 2b du cadre fort 2 comporte :
- une demi-semelle intérieure ou pied 20a, 20b, collée et fixée par des boulons (non réprésentés) à la face interne 3a de la peau de fuselage 3 ;
- une âme 22a, 22b qui s'étend sensiblement perpendiculairement aux demi-semelles respectives 20a, 20b et à la peau 3, et
- un demi-talon 24a, 24b qui s'étend parallèlement aux demi-semelles intérieures 20a, 20b selon une largeur légèrement plus faible que celle de ces demi-semelles intérieures.

Les longerons métalliques 2a et 2b sont, par exemple, en alliage d'aluminium ou de titane et sont assemblées entre eux par des fixations métalliques 5 le long de leurs âmes 22a, 22b. Ces longerons sont donc assemblés « dos à dos » et ont en coupe une forme de « U », dont les côtés sont formés par les demi-semelles intérieures 20a, 20b et les demi-talons 24a, 24b encadrant la base du « U » formée par les âmes 22a, 22b.

Les demi-semelles intérieures 20a et 20b forment la semelle 20 du cadre 2 et les deux demi-talons 24a et 24b un talon 24 pour une éclisse en matériau composite à fibre de carbone 9. Ce matériau est à base d'un polymère (de résine époxy en général) renforcé en fibre de carbone, connu par exemple sous l'appellation CFRP (initiales de « Carbon Fibre Reinforced Polymer »).

Cette éclisse 9 est posée sur la face externe 24e du talon 24 et assemblée à celui-ci par des fixations métalliques 5. De manière cumulative, l'éclisse est collée à la face 24e par tout moyen connu, par exemple par thermofusion avec une résine époxy intercalée ou par rayonnement UV avec une résine appropriée. L'éclisse 9 et le talon 24 ont des largeurs semblables ou proches.

Le cadre 2 présente ainsi une structure en matériau hybride par l'adjonction de l'éclisse en matériau composite. Cette adjonction permet d'éviter une redistribution globale des efforts mécaniques dans une des pièces métalliques 2a, 2b. Cet arrêt de redistribution des efforts permet de ralentir la propagation d'une fissure dans l'une des pièces 2b, alors qu'une fissure se propage encore dans l'autre pièce 2a (et inversement). II apparaît en effet qu'un simple transfert local des efforts se produit, au droit de la fissure Fa dans la pièce 2a, grâce à la présence de l'éclisse en matériau composite 9. Les propagations des fissures sont illustrées ci-après par les schémas de la figure 4 d'analyse de la tolérance aux dommages.

En référence au schéma 4a, des fissures Fa et Fb sont initiés simultanément dans les longerons 2a et 2b, respectivement au niveau des assemblages des demi-semelles extérieures 24a, 24b à l'éclisse composite 9. A l'amorçage, la première fissure Fa présente un défaut de surface de dimension supérieure à celle de la deuxième fissure Fb. Dans l'exemple, les fissures Fa et Fb ont respectivement pour profondeur 1, 27 mm et 0, 127 mm, soit un rapport de dix.

Le schéma 4b illustre les propagations des deux fissures. La fissure Fb, de plus petite taille initiale, se propage moins vite que la fissure Fa de plus grande taille initiale. Les fissures se propagent dans les demi-talons 24a et 24b selon des sens opposés, respectivement F1 et F2. Lorsque la fissure Fa atteint le bord du talon 24, elle se propage ensuite dans le sens F1', d'abord parallèle à F2, puis selon F1" vers l'âme 22a (schéma 4c). II en est de même pour les sens de propagation F2 et F2' de la fissure Fb.

La fissure Fa se propage ensuite jusqu'à la fixation 5 de l'âme 22a ou bien atteint une taille critique : il peut alors être supposé que le premier longeron 2a est rompu (schéma 4d). Cependant, le deuxième longeron 2b ne se trouve pas surchargé pour autant car l'éclisse composite 9 se comporte comme une attelle « de réparation » permettant un transfert local, juste en amont et en aval de la fissure Fa, des efforts transmis par la fissure Fa. Ainsi, il ne se produit pas de redistribution globale des efforts issus de la première fissure Fa sur l'autre longeron 2b, en particulier sur l'autre fissure Fb : la propagation de cette fissure Fb n'augmente pas de vitesse.

La fissure Fb du second longeron 2b se propage également (flèche F2", schéma 4d) jusqu'à la fixation 5 de l'âme 22b du longeron 2b (schéma 4e). A cet instant, il est supposé qu'une rupture globale du cadre 2 s'est produite, même si l'éclisse composite 9 peut conserver une certaine capacité à reprendre les efforts en fonction de sa définition.

Une fois le longeron 2a considéré comme rompu, la fissure Fb s'est toutefois propagée sans effort supplémentaire puisque, comme décrit au regard du schéma 4d, aucune redistribution globale des efforts n'a eu lieu. La fissure Fb a donc pu se propager sensiblement plus lentement que dans le cas où, par redistribution globale des efforts en absence d'éclisse composite 9, le second longeron 2b est surchargé (d'environ 80% par redistribution des efforts, dans l'exemple donné). La tolérance aux dommages, mesurée par la vitesse de propagation des fissures et la définition de l'intervalle d'inspection, a ainsi sensiblement augmenté.

Cette solution constitue alors une opportunité de gain de masse des longerons à intervalle d'inspection égal, ou une augmentation des intervalles d'inspection à masse de longeron conservée. L'augmentation de masse induite par la présence de l'éclisse composite 9 est réduite du fait de sa densité (environ 1,8 g/cm3) par rapport à celle des matériaux métalliques (environ 4,5 g/cm³ pour l'alliage de titane « Ti6Al4V », par exemple).

L'invention n'est pas limitée aux exemples de réalisation décrits et représentés. II est par exemple possible que les longerons soient en nombre supérieur à deux, assemblés ensemble deux à deux. Les longerons peuvent également être des profilés de forme variée en coupe : en « I », en « T », etc. Par ailleurs, l'éclisse composite peut être de forme courbée en coupe, par exemple apte à recouvrir les bouts de talon des longerons. Elle peut être disposée sur d'autres parties que les talons : sur des parties latérales ou entre la peau et les semelles des longerons.

## Revendications

1. Procédé de ralentissement de propagation de fissures (Fa, Fb) dans une structure sécurisée (2) comportant au moins deux pièces métalliques longitudinales (2a, 2b) en forme de « U », les bases (22a, 22b) desdites pièces métalliques étant assemblées dos à dos et les côtés (24a, 24b) desdites pièces métalliques étant alignés en formant un talon (24), le procédé consistant à lier par des fixations (5) au moins un élément de structure (9) en matériau composite au talon (24) formé par les pièces métalliques (2a, 2b) couplées entre elles par des fixations (5) pour former un cadre fort dans une configuration réparatrice de coupure de redistribution globale des efforts mécaniques dans les pièces (2b, 2a) de la structure (2), de sorte que les efforts portés par la pièce fissurée (2a) sont transmis uniquement dans cette pièce (2a) au droit de la fissure (Fa).

2. Procédé de ralentissement selon la revendication 1, dans lequel l'élément de structure (9) s'étend sur toute la longueur des pièces métalliques (2a, 2b).

3. Cadre fort sécurisé équipé d'un élément de structure en matériau composite (9) pour la mise en oeuvre du procédé selon l'une des revendications précédentes, ce cadre (2) possédant des pièces métalliques longitudinales en forme de « U » de structure profilée (2a, 2b), ces pièces métalliques ayant des bases (22a, 22b), lesdites bases étant assemblées dos à dos par des fixations (5), de sorte que des premiers côtés (20 ; 20a, 20b) des pièces métalliques se trouvent alignés longitudinalement et sont destinés à être collés sur la peau de fuselage (3), et des autres côtés (24 ; 24a, 24b) des pièces métalliques sont alignés longitudinalement à distance des premiers côtés (20 ; 20a, 20b), des fixations (5) couplant un élément de structure composite (9) à la face externe (24e) des côtés (24 ; 24a, 24b) des pièces métalliques (2a, 2b) alignés longitudinalement à distance des premiers côtés (20 ; 20a, 20b).

4. Cadre fort sécurisé selon la revendication 3, dans lequel les pièces métalliques (2a, 2b) sont au nombre de deux.

5. Cadre fort sécurisé selon l'une des revendications 3 et 4, dans lequel le matériau des pièces métalliques (2a, 2b) est à base d'un alliage de titane.

6. Cadre fort sécurisé selon l'une quelconque des revendications 3 à 5, dans lequel l'élément de structure en matériau composite (9) forme une éclisse longitudinale qui recouvre toute l'étendue de la face externe (24e) des côtés (24 ; 24a, 24b) des pièces métalliques (2a, 2b) alignés longitudinalement à distance des premiers côtés (20 ; 20a, 20b).

7. Cadre fort sécurisé selon l'une quelconques des revendications 3 à 6, dans lequel l'élément de structure en matériau composite (9) est lié à la face externe (24e) par un moyen de solidarisation choisi entre un collage par une résine époxy, par une couche polymérisée par rayonnement et/ou par dégagement thermique.

## Patentansprüche

1. Verfahren zur Verlangsamung der Ausbreitung von Rissen (Fa, Fb) in einer gesicherten Konstruktion (2), die mindestens zwei längliche Metallteile (2a, 2b) in U-Form aufweist, wobei die Basen (22a, 22b) der Metallteile Rücken an Rücken zusammengefügt sind und die Seiten (24a, 24b) der Metallteile so ausgerichtet sind, dass sie einen Absatz (24) bilden, wobei das Verfahren darin besteht, durch Befestigungen (5) mindestens ein Konstrukttionselement (9) aus Verbundmaterial mit dem Absatz (24), der durch die Metallteile (2a, 2b) gebildet ist, die miteinander durch Befestigungen (5) gekoppelt sind, zu verbinden, um einen Hauptspant in einem Reparaturaufbau zum Unterbrechen der umfassenden Umverteilung der mechanischen Kräfte in den Teilen (2b, 2a) der Konstruktion (2) zu bilden, damit die durch das rissige Teil (2a) getragenen Kräfte nur in diesem Teil (2a) rechtwinklig zu dem Riss (Fa) übertragen werden.

2. Verlangsamungsverfahren nach Anspruch 1, wobei das Konstruktionselement (9) sich über die gesamte Länge der Metallteile (2a, 2b) erstreckt.

3. Gesicherter Hauptspant, der mit einem Konstruktionselement aus Verbundmaterial (9) zur Durchführung des Verfahrens nach einem der vorhergehenden Ansprüche versehen ist, wobei dieser Hauptspant (2) längliche Metallteile in U-Form mit Profilstruktur (2a, 2b) aufweist, wobei diese Metallteile Basen (22a, 22b) haben, wobei die Basen durch Befestigungen (5) Rücken an Rücken zusammengefügt sind, so dass erste Seiten (20; 20a, 20b) der Metallteile in Längsrichtung ausgerichtet und dazu bestimmt sind, auf der Rumpfhaut (3) verklebt zu werden, und andere Seiten (24; 24a, 24b) der Metallteile mit Abstand zu den ersten Seiten (20; 20a, 20b) in Längsrichtung ausgerichtet sind, wobei Befestigungen (5) ein Verbundkonstrukttionselement (9) mit der Außenseite (24e) der Seiten (24; 24a, 24b) der Metallteile (2a, 2b), die mit Abstand zu den ersten Seiten (20; 20a, 20b) in Längsrichtung ausgerichtet sind, koppeln.

4. Gesicherter Hauptspant nach Anspruch 3, wobei die Metallteile (2a, 2b) in einer Anzahl von zwei vorhanden sind.

5. Gesicherter Hauptspant nach einem der Ansprüche 3 und 4, wobei die Basis des Materials der Metallteile (2a, 2b) eine Titanlegierung ist.

6. Gesicherter Hauptspant nach einem der Ansprüche 3 bis 5, wobei das Konstruktionselement aus Verbundmaterial (9) eine längliche Lasche bildet, welche die gesamte Flächenausdehnung der Außenseite (24e) der Seiten (24; 24a, 24b) der Metallteile (2a, 2b), die mit Abstand zu den ersten Seiten (20; 20a, 20b) in Längsrichtung ausgerichtet sind, abdeckt.

7. Gesicherter Hauptspant nach einem der Ansprüche 3 bis 6, wobei das Konstruktionselement aus Verbundmaterial (9) mit der Außenseite (24e) über ein Verbindungsmittel verbunden ist, das ausgewählt ist aus einer Verklebung durch ein Epoxidharz, durch eine durch Strahlung polymerisierte Schicht und/oder durch Wärmefreisetzung.

## Claims

1. Method for slowing the spread of cracks (Fa, Fb) in a failure-mitigating structure (2) comprising at least two U-shaped longitudinal metal components (2a, 2b), the bases (22a, 22b) of said metal components being assembled back to back and the sides (24a, 24b) of said metal components being aligned to form a heel (24), the method consisting in using fasteners (5) to join at least one structural element (9) made of composite to the heel (24) formed by the metal components (2a, 2b) coupled together by fasteners (5) in order to form a mainframe in a break repairing configuration involving an overall redistribution of mechanical load in the components (2b, 2a) of the structure (2) so that the load borne by the cracked component (2a) is transmitted through this component (2a) only in line with the crack (Fa).

2. Method of slowing according to claim 1, in which the structural element (9) extends over the entire length of the metal components (2a, 2b)

3. Failure-mitigating mainframe equipped with a structural element made of composite (9) for the implementation of the method according to either one of the preceding claims, this frame (2) having profiled longitudinal U-shaped structural metal components (2a, 2b), these metal components having bases (22a, 22b), said bases being assembled back to back by fasteners (5), so that first sides (20 ; 20a, 20b) of the metal components are longitudinally aligned and are intended to be bonded to the fuselage skin (3), and other sides (24; 24a, 24b) of the metal components are longitudinally aligned some distance away from the first sides (20; 20a, 20b), fasteners (5) coupling a composite structural element (9) to the external face (24e) of the sides (24; 24a, 24b) of the metal components (2a, 2b) that are longitudinally aligned some distance away from the first sides (20; 20a, 20b).

4. Failure-mitigating mainframe according to claim 3, in which the metal components (2a, 2b) are two in number.

5. Failure-mitigating mainframe according to one of claims 3 and 4, in which the material of the metal components (2a, 2b) is based on a titanium alloy.

6. Failure-mitigating mainframe according to one of claims 3 to 5, in which the structural composite element (9) forms a longitudinal fish plate which covers the entire extent of the external face (24e) of the sides (24; 24a, 24b) of the metal components (2a, 2b) that are aligned longitudinally some distance away from the first sides (20; 20a, 20b).

7. Failure-mitigating mainframe according to one of claims 3 to 6, in which the composite structural element (9) is connected to the external face (24e) by a securing means chosen between bonding using an epoxy resin, using a layer which is polymerized by radiation and/or by the release of heat.
